(19) Europäisches Patentamt
European Patent Office
Office européen des brevets

(11) EP 3 656 797 A1

(12) **EUROPÄISCHE PATENTANMELDUNG**

(43) Veröffentlichungstag:
**27.05.2020 Patentblatt 2020/22**

(21) Anmeldenummer: **18207807.1**

(22) Anmeldetag: **22.11.2018**

(51) Int Cl.:
***C08G 2/22*** *(2006.01)* ***C08G 18/56*** *(2006.01)*
***C08G 64/18*** *(2006.01)* ***C08G 18/44*** *(2006.01)*
***C08G 2/38*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

# (54) VERFAHREN ZUR HERSTELLUNG VON POLYOXYMETHYLEN-POLYALKYLENOXID-BLOCKCOPOLYMEREN

(57) In einem Verfahren zur Herstellung von Polyoxymethylen-Polyalkylenoxid-Blockcopolymeren, umfassend den Schritt der Polymerisation eines Alkylenoxids in Gegenwart eines OH-terminierten Polyoxymethylen-Polymers und eines Katalysators, weist das Polyoxymethylen-Polymer ein zahlenmittleres Molekulargewicht $M_n$, bestimmt nach Derivatisierung mit Propylenoxid und Gelpermeationschromatographie mit Tetrahydrofuran als Eluent gegen Polystyrol-Standards, von ≥ 1100 g/mol bis ≤ 2300 g/mol auf und das Verhältnis von Alkylenoxid zu Polyoxymethylen-Polymer beträgt ≥ 0.05 mol/g.

Die Erfindung betrifft weiterhin nach dem Verfahren erhältliche Copolymere, ein Verfahren zur Herstellung von Polyurethan-Polymeren unter Verwendung dieser Copolymere sowie hieraus erhältliche Polyurethane.

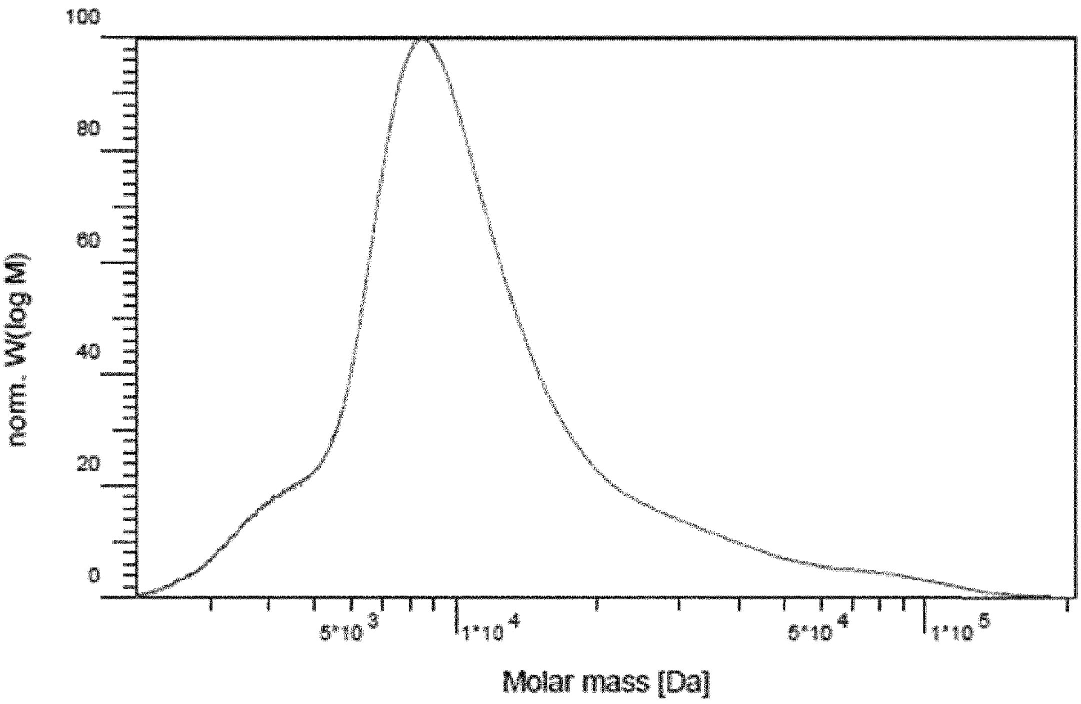


FIG. 1

EP 3 656 797 A1

## Beschreibung

Die vorliegende Erfindung betrifft ein Verfahren zur Herstellung von Polyoxymethylen-Polyalkylenoxid-Blockcopolymeren, umfassend den Schritt der Polymerisation eines Alkylenoxids in Gegenwart eines OH-terminierten Polyoxymethylen-Polymers und eines Katalysators. Sie betrifft weiterhin nach dem Verfahren erhältliche Copolymere, ein Verfahren zur Herstellung von Polyurethan-Polymeren unter Verwendung dieser Copolymere sowie hieraus erhältliche Polyurethane.

Blockcopolymere enthaltend Polyoxymethylen-Einheiten neben anderen Polymerisat- und Polykondensat-Einheiten werden beispielsweise in JP 2007 211082 A, WO 2004/096746 A1, GB 807589, EP 1 418 190 A1, US 3,754,053, US 3,575,930, US 2002/0016395 und JP 04-306215 beschrieben.

US 3,575,930 beschreibt die Reaktion von Dihydroxy-terminiertem Paraformaldehyd $HO-(CH_2O)_n-H$ mit n = 2-64 mit Diisocyanaten zu Isocyanat-terminierten Polyoxymethylenpolymeren, welche in der Reaktion mit Diolen zu Polyurethanverbindungen umgesetzt werden können.

JP 2007 211082 A beschreibt die Umsetzung von Polyoxyalkylen-Polyolen mit einem Äquivalentgewicht von > 2500 mit Formaldehyd, Formaldehyd-Oligomeren oder Formaldehyd-Polymeren zu Polyoxymethylen-Polyoxyalkylen-Blockcopolymeren unter Anwendung von anionischen oder kationischen Polymerisationskatalysatoren. Die eingesetzten hochmolekularen Polyoxyalkylen-Polyol-Starter mit niedriger Polydispersität werden über Doppelmetallcyanid (DMC)-Katalyse hergestellt. Aufgrund des hohen Molekulargewichtes der Polyoxyalkylen-Polyole weisen die erhaltenen Polyoxymethylen-Polyoxyalkylen-Blockcopolymere ein Molekulargewicht von wenigstens > 5000 g/mol auf und sind daher weniger breit als Polyurethan-Baustein einsetzbar.

Weiterhin macht die direkte Umsetzung der Polyoxyalkylen-Polyole mit den Polyoxymethylen-Polymeren über ein Schmelz-Knet-Verfahren den Einsatz von hohen Temperaturen und entsprechenden spezifischen Hochviskosapparaten (Extruder, Kneter, etc.) notwendig.

US 3,754,053 beschreibt Polyoxymethylen-Polyoxyalkylen-Blockcopolymere mit einem Molekulargewicht > 10000 g/mol. Zur Herstellung von Copolymeren mit einem inneren Polyoxymethylen-Block wird in einem erstem Schritt Trioxan zu einem Polyoxymethylen-Präpolymer umgesetzt und dieses dann in Gegenwart von z.B. NaOH als Polymerisationskatalysator mit Alkylenoxiden umgesetzt. Auch hier sind die beschriebenen Polymere aufgrund ihres hohen Molekulargewichts für Anwendungen als Polyurethanbaustein weniger gut geeignet.

WO 2004/096746 A1 und US 2006/0205915 A1 offenbaren die Reaktion von Formaldehyd-Oligomeren mit Alkylenoxiden und/oder Isocyanaten. Bei dieser Methode werden über den beschriebenen Einsatz von Formaldehyd-Oligomeren $HO-(CH_2O)_n-H$ Polyoxymethylen-Blockcopolymere mit einer relativ engen Molmassenverteilung von n = 2-19 erhalten, wobei für die Bereitstellung der Formaldehyd-Oligomere ausgehend von wässriger Formalinlösung ein zusätzlicher thermischer Abtrenn-Verfahrensschritt erforderlich ist. Die erhaltenen Formaldehyd-Oligomer-Lösungen sind hierbei nicht lagerstabil, so dass diese anschließend sofort weiterverarbeitet werden müssen. Außerdem werden in diesen Anmeldungen keine differenzierten Aktivierungsbedingungen, wie beispielsweise der Aktivierungstemperatur, der verwendeten Alkoxylierungskatalysatoren offenbart, welche auch aus sicherheitstechnischen sowie qualitätsrelevanten Gesichtspunkten für eine mögliche großtechnische Anwendung durch undefinierte Temperaturspitzen während des exothermen Polymerisationsprozesses (22.7 kcal/mol PO aus M. Ionesco; Chemistry and Technology of Polyols for Polyurethanes, Rapra Techn. Ltd., 2005) nachteilig sind. Weiterhin sind über diese Methode nur Blockcopolymere mit sehr kurzen Formaldehyd-Blöcken zugänglich.

In EP 1 870 425 A1 wird ein Verfahren zu Herstellung von Polyoxyalkylen-haltigen Polyolen durch Kondensation von substituierten oder unsubstituierten Phenolstrukturen mit Formaldehyden und/oder anderen substituierten Alkanalstrukturen offenbart. Die resultierenden Phenol-Formaldehyd-Kondensate werden hierbei als Polyolstarter für die Alkoxylierung verwendet, wobei innerhalb dieser Starterverbindungen keine Oxymethylen-Wiederholungseinheiten ausgebildet werden. Weiterhin unterscheiden sich resultierenden Eigenschaften der alkoxylierten, aromatenhaltigen Polyole aufgrund der unterschiedlichen chemischen Struktur grundlegend von aliphatischen Polyolstrukturen.

In WO 2012/091968 A1 wird ein Verfahren zur Herstellung Polyetherolen durch Polymerisation von Alkylenoxiden an Starterverbindungen mithilfe von DMC-Katalysatoren beansprucht. Hierbei werden als Formaldehyd-assoziierte Strukturen oligomere Phenol-Formaldehyde Kondensate als entsprechende Starter offenbart, die sich strukturell grundlegend von der Polyoxymethylen-Starterstruktur unterscheiden.

Ausgehend vom Stand der Technik ergab sich daher die Aufgabe ein einfaches und wirtschaftlich vorteilhaftes Verfahren zur Herstellung von Polyoxymethylen-Blockcopolymeren auf Basis von oligomeren und polymeren Formen des Formaldehyds als Startersubstanz zur Verfügung zu stellen, mit dem die sich aus dem Stand der Technik ergebenden Probleme überwunden werden können.

WO 2015/155094 A1 betrifft ein Verfahren zur Herstellung von Polyoxymethylen-Blockcopolymeren durch katalytische Anlagerung von Alkylenoxiden sowie gegebenenfalls weiteren Comonomeren an wenigstens eine polymere Formaldehyd-Starterverbindung, welche wenigstens eine terminale Hydroxylgruppe aufweist, in Gegenwart eines Doppelmetallcyanid (DMC)- Katalysators, wobei (i) in einem ersten Schritt der DMC-Katalysator in Gegenwart der polymeren

Formaldehyd-Starterverbindung aktiviert wird, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird, (ii) in einem zweiten Schritt ein oder mehrere Alkylenoxide sowie gegebenenfalls weitere Comonomere zu der aus Schritt (i) resultierenden Mischung zugesetzt werden, wobei die in Schritt (ii) eingesetzten Alkylenoxide gleich oder verschieden sein können von den bei Schritt (i) eingesetzten Alkylenoxiden, dadurch gekennzeichnet, dass die Aktivierung des DMC-Katalysators im ersten Schritt (i) bei einer Aktivierungstemperatur ($T_{act}$) von 20 bis 120 °C erfolgt.

In WO 2015/155094 A1 wird ausgeführt, dass geeignete polymere Formaldehyd-Starterverbindungen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol aufweisen und von 2 bis 1000, bevorzugt von 2 bis 400, besonders bevorzugt von 8 bis 200 und ganz besonders bevorzugt von 8 bis 100 Oxymethylen-Wiederholungseinheiten umfassen. Die Herstellung der Starterverbindungen wird jedoch nicht beschrieben. In den Ausführungsbeispielen wird kommerziell erhältlicher Paraformaldehyd eingesetzt.

Die vorliegende Erfindung hat sich die Aufgabe gestellt, Polyoxymethylen-Polyalkylenoxid-Blockcopolymere bereitzustellen, welche gut verarbeitbar sind und welche einen gegenüber bisherigen Blockcopolymeren höheren Anteil an Formaldehyd aufweisen.

Erfindungsgemäß gelöst wird die Aufgabe durch ein Verfahren gemäß Anspruch 1, ein Polyoxymethylen-Polyalkylenoxid-Blockcopolymer gemäß Anspruch 11, ein Verfahren zur Herstellung eines Polyurethan-Polymers gemäß Anspruch 14 und ein Polyurethan-Polymer gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

In einem Verfahren zur Herstellung von Polyoxymethylen-Polyalkylenoxid-Blockcopolymeren, umfassend den Schritt der Polymerisation eines Alkylenoxids in Gegenwart eines OH-terminierten Polyoxymethylen-Polymers und eines Katalysators, weist das Polyoxymethylen-Polymer ein zahlenmittleres Molekulargewicht $M_n$, bestimmt nach Derivatisierung mit Propylenoxid und Gelpermeationschromatographie mit Tetrahydrofuran als Eluent gegen Polystyrol-Standards, von $\geq$ 1100 g/mol bis $\leq$ 2300 g/mol (vorzugsweise $\geq$ 1400 g/mol bis $\leq$ 2100 g/mol) auf und das Verhältnis von Alkylenoxid zu Polyoxymethylen-Polymer beträgt $\geq$ 0.05 mol/g.

Es wurde gefunden, dass durch das erfindungsgemäße Verfahren sich Block-Copolymer-Polyole erhalten lassen, welche sich in vorteilhafter Weise zu Polyurethan-Polymeren weiterverarbeiten lassen.

Die erfindungsgemäßen Blockcopolymere sind kostengünstiger als die Standardbausteine für Polyole in PU-Anwendungen sind. Weiterhin ist ihr sogenannter Carbon Footprint kleiner, so dass umweltfreundlichere Bausteine für den PU-Markt bereitgestellt werden können.

Sofern, wie bei Doppelmetallcyanid-Katalysatoren, eine Aktivierung des Katalysators durch Zugabe eines Alkylenoxids vor der eigentlichen Polymerisation erfolgt, wird diese Alkylenoxidmenge auch bei dem erfindungsgemäßen, in mol/g ausgedrückten Verhältnis von Alkylenoxid zu Polyoxymethylen-Polymer mit berücksichtigt.

Die Polymerisation des Alkylenoxids in Gegenwart des OH-terminierten Polyoxymethylen-Polymers und des Katalysators wird vorzugsweise bei einer Temperatur von $\geq$ 60 °C bis $\leq$ 70 °C durchgeführt.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid),1 -Pentenoxid, 2,3-Pentenoxid, 2-Methyl-1,2-butenoxid, 3-Methyl-1,2-butenoxid, 1-Hexenoxid, 2,3 -Hexenoxid, 3,4-Hexenoxid, 2-Methyl-1,2-pentenoxid, 4-Methyl-1,2-pentenoxid, 2- Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. - Vorzugsweise werden als Alkylenoxide Ethylenoxid und/oder Propylenoxid, insbesondere Propylenoxid eingesetzt.

Die einzusetzenden Polyoxymethylen-Polymere, nachfolgend auch als "Formaldehyd-Starterverbindung" oder "pFA" bezeichnet, können als Polymere mit mittlerer Kettenlänge, das heißt mit einer Anzahl von Formaldehydeinheiten im Polymer zwischen der von Paraformaldehyd und der des Werkstoffs POM, beschrieben werden. Solche Polymere können durch ein Verfahren erhalten werden, welches in der am 22. November 2018 eingereichten europäischen Patentanmeldung mit der Anmeldenummer EP18207740 beschrieben ist.

Die Molekulargewichtsbestimmung der einzusetzenden Polyoxymethylen-Polymere kann nicht direkt erfolgen, da sie in den gängigen Eluenten der Gelpermeationschromatographie (GPC) unlöslich sind. Vielmehr wird eine indirekte

Methode gewählt, in der zuvor eine Derivatisierung mit Propylenoxid stattfindet. An dem derivatisierten Polymer, welches auch ein Produkt des erfindungsgemäßen Verfahrens sein kann, wird mittels GPC gegen Polystyrol-Standards und THF als Eluent das zahlenmittlere Molekulargewicht $M_{n,\ Produkt}$ bestimmt. Vorzugsweise liegt hierbei das Gewichtsverhältnis von Propylenoxid zu Polyoxymethylen-Polymer bei der Derivatisierung in einem Bereich von 2:1 bis 4:1.

Die Molekulargewichtsbestimmung des als Edukt eingesetzten Polyoxymethylen-Polymers kann dann in Kenntnis des $M_n$ aus der GPC-Analyse des Produkts und der Massenanteile der Edukte als zahlenmittlere Molekulargewicht $M_n$ des Polyoxymethylen-Polymers ("pFA") wie folgt berechnet werden ($m_{pFA}$: Masse des eingesetzten Polyoxymethylen-Polymers; $m_{PO}$: Masse des eingesetzten Propylenoxids):

$$M_{n,\ pFA} = (m_{pFA} / (m_{pFA} + m_{PO})) \cdot M_{n,\ Produkt}$$

Die nach dem erfindungsgemäßen Verfahren erhältlichen Polyoxymethylen-Block-Copolymere enthalten vorzugsweise weniger als 2 Gew.-%, insbesondere weniger als 1 Gew.-%, bezogen auf die Gesamtmasse des erhaltenen Polyoxymethylen-Block-Copolymers, Formiat und/oder Methoxy-Verunreinigungen.

Die Verwendung des Worts "ein" im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "ein Alkylenoxid", "ein Polyoxymethylen-Polymer" etc. immer auch solche Ausführungsformen, in denen zwei oder mehr Alkylenoxide, zwei oder mehr Polyoxymethylen-Polymer, etc. eingesetzt werden.

In einer Ausführungsform ist der Katalysator ein Doppelmetallcyanid-Katalysator. Für das erfindungsgemäße Verfahren geeignete DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Polymerisation von Alkylenoxiden und ggf. der Copolymerisation von Alkylenoxiden mit geeigneten Comonomeren und ermöglichen die Herstellung von Polyoxymethylen-Copolymeren bei sehr geringen Katalysatorkonzentrationen, so dass eine Abtrennung des Katalysators aus dem fertigen Produkt i. a. nicht mehr erforderlich ist.

Ein typisches Beispiel sind die in EP-A 700 949 beschriebenen hochaktiven DMC-Katalysatoren, die neben einer Doppelmetallcyanidverbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die Konzentration an eingesetztem DMC-Katalysator beträgt üblicherweise 10 bis 10000 ppm, bevorzugt 20 bis 5000 ppm und mehr bevorzugt 50 bis 2000 ppm, bezogen auf die Masse des herzustellenden Polyoxymethylen-Block-Copolymers. Je nach Anforderungsprofil der nachgeschalteten Anwendung kann der DMC-Katalysator im Produkt belassen oder (teilweise) abgetrennt werden. Die (teilweise) Abtrennung des DMC-Katalysators kann beispielsweise durch Behandlung mit Adsorbentien und/oder Filtration erfolgen. Verfahren zur Abtrennung von DMC-Katalysatoren sind beispielsweise beschrieben in US-A-4,987,271, DE-A-3132258, EP- A-0 406 440, US-A-5,391,722, US-A-5,099,075, US-A-4,721,818, US-A-4,877,906 und EP- A-0 385 619.

In einer weiteren Ausführungsform beträgt das Verhältnis von Alkylenoxid zu Polyoxymethylen-Polymer weiterhin $\leq$ 0.1125 mol/g. Vorzugsweise liegt das Verhältnis in einem Bereich von $\geq$ 0.054 mol Alkylenoxid/g Polyoxymethylen-Polymer bis $\leq$ 0.1 mol Alkylenoxid/g Polyoxymethylen-Polymer.

In einer weiteren Ausführungsform weist das Polyoxymethylen-Polymer eine durchschnittliche OH-Funktionalität von > 1,9 auf. Vorzugsweise beträgt die durchschnittliche OH-Funktionalität $\geq$ 2 bis $\leq$ 3.

In einer weiteren Ausführungsform wird in der Reaktion ein Comonomer mit eingesetzt, welches kein Alkylenoxid ist. Als weitere Comonomere können beispielsweise alle sauerstoffhaltigen cyclischen Verbindungen, insbesondere zyklische Ether, wie z.B. Oxetan, THF, Dioxan oder zyklische Acetale wie z.B. 1,3-Dioxolan oder 1,3-Dioxepan, zyklische Ester wie z.B. $\gamma$-Butyrolacton, $\gamma$-Valerolacton, $\varepsilon$-Caprolacton, oder zyklische Säureanhydride wie z.B. Maleinsäureanhydrid, Glutarsäureanhydrid oder Phthalsäureanhydrid sowie Kohlendioxid zum Einsatz kommen. Bevorzugt wird als Comonomer Kohlendioxid eingesetzt. Dann lassen sich Polyoxymethylen-Polyethercarbonat-Block-Copolymere erhalten

Diese weisen im Vergleich zu existierenden Produkten (zum Beispiel Polyetherpolyole im Polyurethanbereich beziehungsweise Polyoxymethylen-(Co-)Polymere im POM-Sektor) zusätzlich $CO_2$ als kostengünstiges und umweltfreundliches Comonomer auf. Da $CO_2$ u.a. ein Abfallprodukt der Energiegewinnung aus fossilen Rohstoffen ist und hier einer erneuten chemischen Verwertung zugeführt wird, ergeben sich durch den Einbau des $CO_2$ in die Polymerstrukturen neben ökonomischen auch ökologische Vorteile (günstige $CO_2$-Bilanz der Produktpolymere, etc.).

Polyoxymethylen-Polyoxyalkylencarbonat-Block-Copolymere im Sinne der Erfindung bezeichnen polymere Verbindungen, die mindestens einen Polyoxymethylen-Block sowie mindestens einen Polyoxyalkylencarbonat-Block enthalten. Polyoxymethylen-Polyoxyalkylencarbonat-Blockcopolymere sind besonders interessant als Einsatzstoffe im Polyurethanbereich sowie für Anwendungen im Polyoxymethylen (POM)-Sektor. Durch Veränderung des $CO_2$-Gehaltes

können die physikalischen Eigenschaften auf die jeweilige Anwendung angepasst werden, wodurch neue Anwendungsgebiete für diese Blockcopolymere erschlossen werden können.

Insbesondere lassen sich über das erfindungsgemäße Verfahren Polyoxymethylen-Polyoxyalkylencarbonat-Copolymere bereitstellen, wobei ein hoher Gehalt an eingebautem $CO_2$ erreicht wird, die Produkte eine vergleichsweise niedrige Polydispersität aufweisen und sehr wenige Neben- und Zersetzungsprodukte des polymeren Formaldehyds enthalten.

Bei der Herstellung der Polyoxymethylen-Polyoxyalkylencarbonat-Blockcopolymere unter Copolymerisation von $CO_2$ als Comonomer wird vorzugsweise ein Überschuss an Kohlendioxid bezogen auf die zu erwartende bzw. abgeschätzte Menge an eingebautem Kohlendioxid im Polyoxyalkylencarbonatblock eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung des Polyoxyalkylencarbonatblockes als vorteilhaft erwiesen.

Für das erfindungsgemäße Verfahren hat sich weiterhin gezeigt, dass die Copolymerisation zur Herstellung des Polyoxyalkylencarbonatblockes vorteilhafterweise bei 50 bis 150 °C, bevorzugt bei 60 bis 145 °C, besonders bevorzugt bei 70 bis 140°C und ganz besonders bevorzugt bei 90 bis 130 °C durchgeführt wird. Werden Temperaturen unterhalb von 50 °C eingestellt, läuft die Reaktion unverhältnismäßig langsam ab. Bei Temperaturen oberhalb von 150 °C steigt die Menge an unerwünschten Nebenprodukten stark an.

Weiterhin ist zu beachten, dass das $CO_2$ bei der Wahl von Druck und Temperatur vom gasförmigen Zustand möglichst in den flüssigen und/oder überkritischen flüssigen Zustand übergeht. $CO_2$ kann jedoch auch als Feststoff in den Reaktor gegeben werden und dann unter den gewählten Reaktionsbedingungen in den flüssigen und/oder überkritischen flüssigen Zustand übergehen.

Kohlendioxid kann in gasförmigem, festem, flüssigem oder überkritischem Zustand, bevorzugt im gasförmigen oder festen, besonders bevorzugt im gasförmigen Zustand eingesetzt werden. Bei Einsatz von Kohlendioxid im gasförmigen Zustand wird ein Kohlendioxid-Partialdruck von 1 bis 73,8 bar, bevorzugt von 1 bis 60 bar, besonders bevorzugt von 5 bis 50 bar gewählt. Die Kombination aus Druck und Temperatur wird bei Verwendung von gasförmigem Kohlendioxid derart gewählt, dass Kohlendioxid sich als Reinsubstanz unter den gewählten Reaktionsbedingungen im gasförmigen Zustand befindet. Die entsprechenden Bedingungen können anhand des Phasendiagrammes abgeleitet werden. Nach Einbringen von gasförmigem Kohlendioxid in den Reaktor löst sich dieses teilweise oder ganz in der Reaktionsmischung.

In einer weiteren Ausführungsform ist der Katalysator ein Doppelmetallcyanid-Katalysator (DMC-Katalysator) und:

(i) in einem ersten Schritt wird der DMC-Katalysator in Gegenwart des Polyoxymethylen-Polymers aktiviert, wobei zur Aktivierung des DMC-Katalysators eine Teilmenge (bezogen auf die Gesamtmenge der bei der Aktivierung und Polymerisation eingesetzten Menge an Alkylenoxid) von einem Alkylenoxid zugesetzt wird,

(ii) in einem zweiten Schritt wird ein Alkylenoxid zu der aus Schritt (i) resultierenden Mischung zugesetzt, wobei das in Schritt (ii) eingesetzte Alkylenoxid gleich oder verschieden sein kann von dem in Schritt (i) eingesetzten Alkylenoxid und

die Aktivierung des DMC-Katalysators im ersten Schritt (i) bei erfolgt einer Aktivierungstemperatur von ≥ 20 °C bis ≤ 120 °C.

Bei der Aktivierung des DMC-Katalysators kann aufgrund einer exothermen chemischen Reaktion eine Wärmeentwicklung, die zu einer Temperaturspitze ("Hotspot") führen kann, sowie aufgrund der Umsetzung von Alkylenoxid ein Druckabfall im Reaktor beobachtet werden.

Ohne an eine bestimmte Theorie gebunden sein zu wollen, ist anzunehmen, dass während des Aktivierungsschrittes des DMC-Katalysators (i) ebenfalls eine Konditionierung der Formaldehyd-Starterverbindung erfolgt, wobei eine Bildung von Neben-und Zersetzungsprodukten (wie Formiaten, Methoxy-Derivaten und monomerem Formaldehyd) sowie die Defragmentierung des polymeren Formaldehyds zu kürzeren Kettenlängen verhindert und gleichzeitig eine hinreichende Aktivität und Selektivität des Katalysators erreicht wird.

Der Schritt der Aktivierung des DMC-Katalysators mit der Konditionierung des polymeren Formaldehyd-Starters lässt sich bei milden Temperaturen durchführen. Die Konditionierung der Formaldehyd-Starterverbindung in Gegenwart des DMC-Katalysators ermöglicht es, dass der Starter im darauffolgenden Polymerisationsschritt auch bei höheren Reaktionstemperaturen mit Alkylenoxiden und gegebenenfalls weiteren Comonomeren umgesetzt werden kann, ohne dass es dann zu einer weiteren Defragmentierung und/oder der Bildung von Neben- und Zersetzungsprodukten kommt.

Ein weiterer Vorteil ist, dass die konditionierte Formaldehyd-Starterverbindung zumeist nach der Konditionierung eine wesentlich höhere Löslichkeit aufweist, so dass nur geringe Mengen oder keine weiteren Lösungs- und/oder

Suspensionsmittel benötigt werden. Weiterhin lässt sich sicherstellen, dass ein aktives DMC- Katalysatorsystem für die Polymerisation vorliegt und eine stetig voranschreitende Polymerisation unter kontinuierlicher Zugabe der Comonomere ein sicheres Verfahren sowie hohe Produktqualität sicherstellt.

Daher erfolgt die Aktivierung des DMC-Katalysators in Gegenwart der polymeren Formaldehyd-Starterverbindung. Die Starterverbindung und der DMC-Katalysator können hierbei gegebenenfalls in einem Suspensionsmittel suspendiert sein. Ebenso ist es auch möglich eine weitere flüssige Starterverbindung ("Costarter") im Gemisch einzusetzen, wobei der DMC-Katalysator und die polymere Formaldehyd-Starterverbindung in dieser suspendiert sind. Die Aktivierung des DMC-Katalysators erfolgt bei einer Aktivierungstemperatur im Bereich von 20 bis 120 °C, bevorzugt bei 30 bis 120 °C, besonders bevorzugt bei 40 bis 100 °C und ganz besonders bevorzugt bei 60 bis 100 °C.

Vorzugsweise wird das Verfahren derart durchgeführt, dass sich an die Aktivierung des Katalysators und die Konditionierung der polymeren Formaldehyd-Starterverbindung in Schritt (ß) ein Polymerisationsschritt ($\gamma$) unter Dosierung von einem oder mehreren Alkylenoxiden anschließt. Grundsätzlich kann das Verfahren aber auch nach Schritt (ß) beendet werden, so dass die konditionierte polymere Formaldehyd-Starterverbindung dann das Endprodukt des Verfahrens darstellt. Diese weist im Allgemeinen durch die erfindungsgemäße Konditionierung eine hohe Stabilität auf und kann analog zu dem aus Schritt ($\gamma$) erhaltenen Polyoxymethylen-Blockcopolymer, wenn gewünscht, als OH-funktioneller Baustein für diverse Folgereaktionen eingesetzt werden. In einer weiteren Ausführungsform werden im ersten Schritt (i)

($\alpha$) ein Suspensionsmittel oder das Polyoxymethylen-Polymer vorgelegt und eventuell vorhandenes Wasser und/oder andere leicht flüchtige Verbindungen durch erhöhte Temperatur und/oder reduzierten Druck entfernt (Trocknung), wobei der DMC-Katalysator dem Polyoxymethylen-Polymer oder dem Suspensionsmittel vor oder nach der Trocknung zugesetzt wird,

($\beta$) zur Aktivierung des DMC-Katalysators in Gegenwart des Polyoxymethylen-Polymers eine Teilmenge (bezogen auf die Gesamtmenge der bei der Aktivierung und Polymerisation eingesetzten Menge an Alkylenoxide) von Alkylenoxid zu der aus Schritt (a) resultierenden Mischung zugesetzt und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (ß) zur Aktivierung auch mehrfach erfolgen kann, und im zweiten Schritt (ii)

($\gamma$) ein Alkylenoxid zu der aus Schritt ($\beta$) resultierenden Mischung zugesetzt, wobei in Schritt ($\gamma$) eingesetztes Alkylenoxid gleich oder verschieden sein kann von in Schritt ($\beta$) eingesetztem Alkylenoxid und wobei wenigstens in einem der Schritte ($\alpha$) und ($\beta$) mindestens ein Polyoxymethylen-Polymer zugesetzt wird.

In einer weiteren Ausführungsform wird Schritt ($\gamma$) bei einer Temperatur von $\geq$ 60 °C bis $\leq$ 70 °C durchgeführt.

In einer weiteren Ausführungsform wird in Schritt ($\alpha$) als Suspensionsmittel mindestens eine Verbindung ausgewählt aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Propylencarbonat und Tetrachlorkohlenstoff eingesetzt.

In einer weiteren Ausführungsform werden in Schritt ($\alpha$)

($\alpha$1) ein Suspensionsmittel und der DMC-Katalysator vorgelegt und Wasser und/oder andere leicht flüchtige Verbindungen dadurch entfernt, dass bei einer Temperatur von $\geq$ 90 °C bis $\leq$ 150 °C mindestens einmal mit > 1 bar bis $\leq$ 100 bar (absolut) eines Inertgases beaufschlagt wird und jeweils anschließend der Überdruck auf > 1 bar bis $\leq$ 20 bar (absolut) reduziert wird und in einem darauffolgenden Schritt

($\alpha$2) zu dem Gemisch aus Schritt ($\alpha$1) wird das Polyoxymethylen-Polymer zugegeben.

Die polymere Formaldehyd-Starterverbindung kann hierbei gemeinsam mit dem DMC-Katalysator und dem Suspensionsmittel in Schritt ($\alpha$) vorgelegt werden, oder bevorzugt nach der Trocknung, spätestens in Schritt ($\beta$), zugegeben werden.

Die gegebenenfalls eingesetzten Suspensionsmittel enthalten im Allgemeinen keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehreren dieser Suspensionsmittel eingesetzt werden.

Zu Schritt ($\alpha$) (Trocknung):
Die Zugabe der einzelnen Komponenten in Schritt ($\alpha$) kann gleichzeitig oder nacheinander in beliebiger Reihenfolge erfolgen.

Bevorzugt wird in Schritt ($\alpha$) ein Suspensionsmittel, das keine H- funktionellen Gruppen enthält, im Reaktor

vorgelegt. Anschließend wird die für die Polymerisation benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Alternativ können auch in Schritt (α) ein Suspensionsmittel, das keine H- funktionellen Gruppen enthält, und zusätzlich eine Teilmenge der polymeren Formaldehyd-Starterverbindung sowie gegebenenfalls DMC-Katalysator im Reaktor vorgelegt werden, oder es können auch in Schritt (α) eine Teilmenge der polymeren Formaldehyd-Starterverbindung sowie gegebenenfalls DMC-Katalysator im Reaktor vorgelegt werden. Weiterhin können auch in Schritt (α) die Gesamtmenge der polymeren Formaldehyd-Starterverbindung sowie gegebenenfalls DMC- Katalysator im Reaktor vorgelegt werden.

Die polymere Formaldehyd-Starterverbindung kann hierbei grundsätzlich als Gemisch mit weiteren polymeren Formaldehyd-Starterverbindungen oder anderen H-funktionellen Starterverbindungen vorgelegt werden. Das Verfahren kann derart durchgeführt werden, dass in Schritt (α) ein Suspensionsmittel, die polymere Formaldehyd-Starterverbindung und der DMC-Katalysator vorgelegt werden und gegebenenfalls Wasser und/oder andere leicht flüchtige Verbindungen durch erhöhte Temperatur und/oder reduzierten Druck entfernt werden ("Trocknung") oder in einer alternativen Ausführungsform der Schritt (α) derart durchgeführt wird, dass in einem Schritt (α1) ein Suspensionsmittel und der DMC-Katalysator vorgelegt und gegebenenfalls Wasser und/oder andere leicht flüchtige Verbindungen durch erhöhte Temperatur und/oder reduzierten Druck entfernt werden ("Trocknung") und in einem darauffolgenden Schritt (α2) zu dem Gemisch aus Schritt (α1) die Formaldehyd-Starterverbindung zugegeben wird.

Die Zugabe der polymeren Formaldehyd-Starterverbindung kann nach Abkühlung der Reaktionsmischung aus Schritt (α1), insbesondere bei Raumtemperatur, erfolgen, oder es kann die Reaktionsmischung bereits auf die im darauffolgenden Schritt (β) vorherrschende Temperatur gebracht werden und die Zugabe bei dieser Temperatur erfolgen. Die Zugabe der Formaldehyd-Starterverbindung erfolgt im Allgemeinen unter inerten Bedingungen. Der DMC-Katalysator wird vorzugsweise in einer Menge eingesetzt, so dass der Gehalt an DMC- Katalysator im resultierenden Reaktionsprodukt 10 bis 10000 ppm, besonders bevorzugt 20 bis 5000 ppm und höchst bevorzugt 50 bis 2000 ppm beträgt.

In einer bevorzugten Ausführungsform wird in das resultierende Gemisch aus Suspensionsmittel und DMC-Katalysator und/oder der polymeren Formaldehyd-Starterverbindung ein Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder der polymeren Formaldehyd-Starterverbindung mindestens einmal, vorzugsweise dreimal mit 1 bar bis 100 bar (absolut), besonders bevorzugt 3 bar bis 50 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar bis 20 bar (absolut) reduziert.

Der DMC-Katalysator kann beispielweise in fester Form oder als Suspension in einem oder mehreren Suspensionsmittel(n) oder - falls die polymere Formaldehyd-Starterverbindung in einem flüssigen Aggregatszustand vorliegt - als Suspension in einer polymeren Formaldehyd-Starterverbindung zugegeben werden.

Zu Schritt (β) (Aktivierung):

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 20 bis 120 °C ("Aktivierungstemperatur") zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird.

Das Alkylenoxid kann in einem Schritt oder schrittweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Für das erfindungsgemäße Verfahren hat sich weiterhin gezeigt, dass die Aktivierung (Schritt (β)) in Gegenwart der polymeren Formaldehyd-Starterverbindung zur Herstellung der Polyoxymethylen-Blockcopolymere vorteilhafterweise bei einer Aktivierungstemperatur von 20 bis 120 °C, bevorzugt bei 30 bis 120 °C, besonders bevorzugt bei 40 bis 100 °C und ganz besonders bevorzugt bei 60 bis 100 °C durchgeführt wird. Die Wärmeentwicklung durch die chemische Reaktion bei der Aktivierung des DMC-Katalysators führt erfindungsgemäß vorzugsweise nicht zu einem Überschreiten einer Temperatur von 120 °C im Reaktionsgefäß. Unterhalb von 20 °C läuft die Reaktion nur sehr langsam ab und eine Aktivierung des DMC- Katalysators dauert

unverhältnismäßig lange oder findet ggf. nicht im gewünschten Umfang statt. Bei Temperaturen von 130 °C und höher steigt die Menge an unerwünschten Neben-/ Zersetzungsprodukten polymerer Formaldehyd-Starterverbindungen stark an. Es wird z.B. die Bildung von Formiat und Methoxy-Spuren beobachtet. Es hat sich weiterhin als Vorteil dieser Ausführungsform gezeigt, dass sich über eine genaue Abstimmung der Parameter in diesem Bereich ebenfalls die Eigenschaften des erhaltenen Polyoxymethylen-Blockcopolymers, insbesondere die Länge des Polyoxymethylen-Blocks, beeinflussen lassen.

Gegebenenfalls kann die Teilmenge des Alkylenoxids in mehreren Einzelschritten, gegebenenfalls in Gegenwart von $CO_2$, zum Reaktionsgemisch gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum Reaktionsgemisch bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der polymeren Formaldehyd-Starterverbindung bei erhöhter Temperatur und/oder reduziertem Druck, gegebenenfalls unter Durchleiten eines Inertgases durch die Reaktionsmischung, vorgelagert sein, wobei dieser Schritt der Trocknung nicht Teil des Aktivierungsschrittes im Sinne der vorliegenden Erfindung ist. Die Dosierung eines oder mehrerer Alkylenoxide (und gegebenenfalls der weiteren Comonomere, insbesondere Kohlendioxid) kann prinzipiell in unterschiedlicher Weise erfolgen. Der Start der Dosierung kann aus dem Unterdruck heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck (absolut) 5 mbar bis 100 bar, vorzugsweise 10 mbar bis 50 bar und bevorzugt 20 mbar bis 50 bar beträgt.

Eine alternative Ausführungsform ist auch eine zweistufige Aktivierung (Schritt β), wobei

(β -I) in einer ersten Aktivierungsstufe die Zugabe einer ersten Teilmenge von Alkylenoxid unter Inertgasatmosphäre erfolgt und

(β -II) in einer zweiten Aktivierungsstufe die Zugabe einer zweiten Teilmenge von Alkylenoxid unter Kohlendioxid-Atmosphäre erfolgt.

Zu Schritt (γ) (Polymerisation) :
Die Dosierung eines oder mehrerer Alkylenoxide kann simultan oder sequentiell über jeweils separate Dosierungen (Zugaben) oder über eine oder mehrere Dosierungen erfolgen. Werden mehrere Alkylenoxide zur Synthese der Polyoxymethylen-Blockcopolymere eingesetzt, so können die Alkylenoxide einzeln oder als Gemisch dosiert werden.

Die drei Schritte (a), (ß) und (γ) können in demselben Reaktor oder jeweils separat in unterschiedlichen Reaktoren durchgeführt werden. Besonders bevorzugte Reaktortypen für das erfindungsgemäße Verfahren sind Rührkessel, Rohrreaktor, und Schlaufenreaktor. Weiterhin können auch Extruder, Kneter, etc. als bevorzugte Reaktoren für das erfindungsgemäße Verfahren eingesetzt werden. Werden die Reaktionsschritte α, ß und γ in unterschiedlichen Reaktoren durchgeführt, kann für jeden Schritt ein unterschiedlicher Reaktortyp verwenden werden. Bei einer vollständig kontinuierlichen Reaktionsführung sind bevorzugt die einzelnen Schritte bzw. die Schritte (a) und (ß) von (γ) räumlich voneinander zu trennen, so dass eine getrennte Temperaturführung sowie eine geeignete Gaszufuhr und Anlegen von Unterdruck, Zugabe von polymerem Formaldehyd und Dosierung von Monomeren in den Einzelschritten erfindungsgemäß möglich ist.

Aufgrund ihrer thermischen und chemischen Stabilität lassen sich die erfindungsgemäßen Polyoxymethylen-Blockcopolymere, bzw. die aus dem Verfahren erhaltenen Produktgemische insbesondere destillativ aufarbeiten. Dabei kommen bevorzugt Dünnschichtverdampfer, Strangverdampfer und Stripp-Kolonnen sowie Kombinationen dieser zum Entfernen von Lösungs- bzw. Suspensionsmitteln, flüchtigen Bestandteilen und unreagierte Monomeren und/oder Oligomeren zum Einsatz. Jedoch sind hier auch prinzipiell alle anderen Apparaturen zur thermischen destillativen Aufarbeitung geeignet. Diese Art der Aufarbeitung kann kontinuierlich oder diskontinuierlich sowie parallel oder im Anschluss an die Reaktion erfolgen.

Die Erfindung betrifft ebenfalls ein Polyoxymethylen-Polyalkylenoxid-Blockcopolymer, erhältlich nach einem erfindungsgemäßen Verfahren. Sie können zur Herstellung von Polyurethanen, Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden.

In einer Ausführungsform weist das Polyoxymethylen-Polyalkylenoxid-Blockcopolymer eine Viskosität bei 20 °C, bestimmt durch DIN 51562, von ≥ 22000 mPas bis ≤ 26000 mPas, vorzugsweise ≥ 23000 mPas bis ≤ 25000 mPas, auf. Bei 25 °C beträgt die Viskosität vorzugsweise ≥ 14000 mPas bis ≤ 18000 mPas und mehr bevorzugt ≥ 15000 mPas bis ≤ 17000 mPas.

In einer weiteren Ausführungsform ist das Polymer ein Polyoxymethylen-Polyoxyalkylencarbonat-Block-Copolymer und umfasst einen inneren Polyoxymethylen-Block ("Starter") sowie wenigstens einen äußeren Polyoxyalkylencarbonatblock gemäß der Formel:

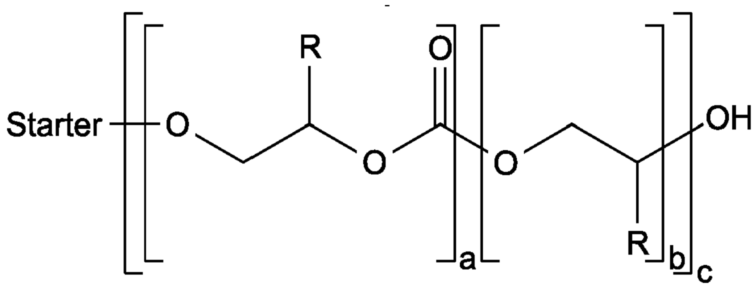

wobei R unabhängig voneinander für einen organischen Rest steht, a, b und c eine für eine ganze Zahl stehen, R sich in verschiedenen Wiederholungseinheiten unterscheiden kann, die Struktureinheit "Starter" einen aus dem Polyoxymethylen-Polymer hervorgehenden Polyoxymethylen-Block darstellt und a, b und c so gewählt sind, dass der Anteil des "Starters" ≤ 35 Gewichts-%, der Anteil von aus $CO_2$ hervorgehenden Struktureinheiten ≤ 25 Gewichts-% und der Anteil von aus Alkylenoxiden hervorgehenden Struktureinheiten die Differenz zu 100 Gewichts-%, jeweils bezogen auf das Gesamtgewicht des Polymers, ausmacht.

R kann beispielsweise für einen organischen Rest wie Alkyl, Alkylaryl, Arylalkyl oder Aryl stehen, der jeweils auch Heteroatome wie beispielsweise O, S, Si, etc. enthalten kann. In der obigen Formel können sich Blöcke mit der gezeigten Struktur im erhaltenen Polyoxymethylen-Polyoxyalkylencarbonat-Block-Copolymer prinzipiell wiederfinden, die Reihenfolge, Anzahl und Länge der Blöcke sowie die OH-Funktionalität des "Starters" kann aber variieren und ist nicht auf das gezeigte Polyoxymethylen-Polyoxyalkylencarbonat-Block-Copolymer beschränkt.

Ein weiterer Aspekt der Erfindung ist ein Verfahren zur Herstellung eines Polyurethan-Polymers, umfassend den Schritt der Reaktion einer Polyisocyanat-Komponente mit einer Polyolkomponente, wobei die Polyolkomponente ein erfindungsgemäßes Polyoxymethylen-Polyalkylenoxid-Blockcopolymer umfasst. Geeignete Polyisocyanate sind beispielsweise TDI, MDI, polymeres MDI, H12-MDI, HDI, HDI-Isocyanurat (HDI-Trimer) und IPDI. Weitere Polyole wie Polyetherpolyole, Polyesterpolyole oder Polyetheresterpolyole und Additive wie Treibmittel oder Füllstoffe können ebenfalls mitverwendet werden.

Die Erfindung betrifft ebenfalls ein Polyurethan-Polymer, erhältlich durch ein erfindungsgemäßes Verfahren. Hervorzuheben sind Polyurethan-Thermoplaste, Polyurethan-Beschichtungen, - Fasern, -Elastomere, -Klebstoffe sowie insbesondere auch Polyurethan-Schaumstoffe, eingeschlossen Weichschäume (wie beispielsweise Polyurethan-Weichblockschaumstoffe und Polyurethan-Weichformschaumstoffe) und Hartschäume.

## Beispiele

Die vorliegende Erfindung wird anhand der nachfolgenden Beispiele und Figuren näher erläutert, ohne jedoch darauf beschränkt zu sein.

FIG. 1 zeigt ein Gelpermeationschromatogramm einer Probe aus Beispiel 1

FIG. 2 zeigt ein Gelpermeationschromatogramm einer Probe aus Beispiel 2

FIG. 3 zeigt ein Gelpermeationschromatogramm einer Probe aus Beispiel 3

FIG. 4 zeigt ein Gelpermeationschromatogramm einer Probe aus Gegenbeispiel 2

### GPC-Methode:

Die Molekulargewichtsbestimmung der Block-Copolymeren mittels Gelpermeationschromatographie (GPC) erfolgte mit Tetrahydrofuran (THF) als Eluent gegen Polystyrol-Standards. Ergänzend wurden gemäß DIN 53240 die Hydroxylzahlen (OHZ) der Proben bestimmt und Molekulargewichte der Block-Copolymeren gemäß der Formel MW = 1000 mg/g · (F · 56,106 g/mol) / OHZ errechnet, wobei die Funktionalität F als 2 angenommen wurde. Polydispersitätsindices PDI wurden aus $M_w/M_n$ (GPC) berechnet.

### NMR-Methode zur Bestimmung der Polymerzusammensetzung:

Die Zusammensetzung des Polymers wurden mittels $^1$H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die

relevanten Resonanzen im $^1H$-NMR (bezogen auf TMS = 0 ppm) und die Zuordnung der Flächenintegrale (A) ergeben sich wie folgt:

- cyclisches Propylencarbonat (cPC), Lösungsmittel, mit Resonanz bei 4,5 ppm, Flächenintegral entspricht einem H-Atom;
- monomeres Propylenoxid (PO), welches nicht abreagiert vorliegt, mit Resonanz bei 2,4 bzw. 2,75 ppm, Flächenintegral entspricht jeweils einem H-Atom;
- Polypropylenoxid (PPO), PO-Homopolymer, mit Resonanzen bei 1,2 bis 1,0 ppm, Flächenintegral entspricht 3 H-Atomen;
- Poly- bzw. Paraformaldehyd (pFA) mit Resonanzen bei 4,6 bis 5,2 ppm, Flächenintegral minus je ein H-Atom des cyclischen Propylencarbonats (cPC);
- Formiat (HCOO), Nebenprodukt, mit Resonanz bei 8,1 ppm, Flächenintegral entspricht einem H-Atom;
- Methoxy (MeO), Nebenprodukt in Spuren, mit Resonanz bei 3,4 ppm.

Die Ermittlung der Molenanteile (x) der Reaktionsmischung erfolgt wird folgt:

- x(cPC) = A(4,5 ppm)
- x(PO) = A(2,75 ppm) oder A(2,4 ppm)
- x(PPO) = A(1,2-10 ppm)/3
- x(pFA) = (A(4,6-5,2 ppm) - x(cPC)
- x(HCOO) = A(8,1 ppm)

Die so ermittelte Zusammensetzung des Reaktionsgemischs wird anschließend in Gewichtsteile umgerechnet und auf 100 normiert. Zur Umrechnung der Gewichtsanteile werden folgende Molmassen (g/mol) verwendet: cPC = 102, PO und PPO = 58, pFA = 30 und HCOO = 45. Die Polymerzusammensetzung wird anhand der Anteile PPO und pFA berechnet und normiert, so dass auch hier die Angabe in Gewichtsteilen von 100 (Gew.-%) erfolgt.

**Molmasse des Paraformaldehydblocks:**

Die Molmasse des pFA-Blocks im Produktpolymer wurde mittels gravimetrischer und NMR analytischer Methode durchgeführt nach untenstehenden Formeln:

1) Bestimmung mittels Massenanteil: MW(pFA) = $M_n$(OHZ) · (m(PFA)/(m(pFA)+m(PO)))

2) Bestimmung mittels NMR: MW(pFA) = $M_n$(OHZ) · (pFA-Anteil im Polymer, NMR)/100 berechnet, wobei $M_n$(OHZ) das mittels OH-Zahl Titration bestimmte Molekulargewicht MW (MW = 56100 * 2/OH-Zahl) darstellt.

**Synthese des Polyoxymethylen-Polymers**

Dieses Polymer wurde wie in der am 22. November 2018 eingereichten europäischen Patentanmeldung mit der Anmeldenummer EP18207740 beschrieben ist. beschrieben synthetisiert. Das in Beispielen 1 und 2 eingesetzte Polyoxymethylen-Polymer wurde gemäß Beispiel 1 von EP18207740 hergestellt und das im Beispiel 3 eingesetzte Polyoxymethylen-Polymer gemäß Beispiel 2 von EP18207740.

**Beispiel 1 (erfindungsgemäß): Herstellung eines Polyoxymethylen-Polyoxyalkylen-Blockcopolymers unter Verwendung des Polyoxymethylen-Polymers als Startermaterial**

In diesem Beispiel betrug das Massenverhältnis von Propylenoxid zu pFA-Starter exklusive des zur Katalysatoraktivierung eingesetzten Propylenoxids 200 g/50 g = 4 g/g. Auf die Stoffmenge des Propylenoxids umgerechnet betrug das Verhältnis 3,44 mol/50 g = 0,069 mol/g. Inklusive des zur Aktivierung eingesetzten Propylenoxids (10 g) betrugen die Verhältnisse 4,2 g/g und 0,072 mol/g.

500 mg getrockneter DMC-Katalysator, der nicht aktiviert ist, wurde in 200,0 g 4-Methyl-2-oxo-1,3-dioxolan (im Folgenden auch als cyclisches Propylencarbonat oder cPC bezeichnet) in einem 1,0 L Druckreaktor mit Gasdosierungseinrichtung suspendiert. Die Suspension wurde unter Rühren (500 rpm) auf 130 °C erhitzt. Gleichzeitig wurde für 30 min ein Vakuum angelegt und der Druck mit einem konstanten Volumenstrom mit Stickstoff durch den Reaktor auf 100 mbar eingestellt (Vakuumstrippen).

Nach beendetem Vakuumstrippen wurde der Druck mit Stickstoff auf 5 bar eingestellt und ein Puls Propylenoxid (10 g) zur Reaktionslösung gegeben. Die Aktivierung des Katalysators machte sich durch einen Temperaturanstieg bei

gleichzeitigem Druckabfall bemerkbar. Im Anschluss an die Katalysatoraktivierung wurde der Reaktor auf Raumtemperatur abgekühlt und der Druck abgelassen. In den Reaktor wurden 50,0 g Polyoxymethylen-Polymer (pFA) hinzugefügt und der Reaktor erneut verschlossen und durch Aufpressen und Ablassen mit Stickstoff gespült. Anschließend wurde ein Druck von 10 bar Stickstoff eingestellt. Die Reaktorinnentemperatur wurde auf 70 °C eingestellt.

Zu der Suspension wurden 50 g Propylenoxid mit einer Förderrate von 10 g/min schnell addiert. Nach beendeter Zugabe und Erreichen eines konstanten Drucks wurde abgewartet, bis eine exotherme Reaktion im Reaktor verbunden mit gleichzeitigem Druckabfall beobachtet werden konnte.

Nach dem Abklingen der exothermen Reaktion wurde die Reaktortemperatur auf 100 °C erhöht und die restliche Menge Propylenoxid (150 g) mit einer Förderrate von 3 g/min hinzugefügt (Semibatchphase). Nach beendeter Zugabe wurde bis zum Abklingen der exothermen Reaktion und bis zur Druckkonstanz bei 100 °C gerührt. Anschließend wurde der Reaktor abgekühlt und das Produkt entnommen. Die analytischen Daten sind in der Tabelle 1 angegeben. Die Molmassenverteilung ist im GPC-Diagramm der FIG. 1 zu sehen.

**Beispiel 2 (erfindungsgemäß): Herstellung eines Polyoxymethylen-Polyoxyalkylen-Blockcopolymers unter Verwendung des Polyoxymethylen-Polymers als Startermaterial**

In diesem Beispiel betrug das Massenverhältnis von Propylenoxid zu pFA-Starter exklusive des zur Katalysatoraktivierung eingesetzten Propylenoxids 150 g/50 g = 3 g/g. Auf die Stoffmenge des Propylenoxids umgerechnet betrug das Verhältnis 2,57 mol/50 g = 0,051 mol/g. Inklusive des zur Aktivierung eingesetzten Propylenoxids (10 g) betrugen die Verhältnisse 3,2 g/g und 0,055 mol/g.

Entsprechend des Beispiels 1 wurde ein Polyoxymethylen-Polyoxyalkylen-Blockcopolymer hergestellt, wobei während der Semibatchphase nur 100 g Propylenoxid gefördert wurden. Die Molmassenverteilung ist im GPC-Diagramm der FIG. 2 zu sehen.

**Beispiel 3 (erfindungsgemäß): Herstellung eines Polyoxymethylen-Polyoxyalkylen-Blockcopolymers unter Verwendung des Polyoxymethylen-Polymers als Startermaterial**

In diesem Beispiel wurden gegenüber dem Beispiel 2 eine geringere Menge an Katalysator und eine größere Menge an Propylenoxid zur Katalysatoraktivierung eingesetzt. Weiterhin unterschied sich die Propylenoxid-Dosierung. Das Massenverhältnis von Propylenoxid zu pFA-Starter exklusive des zur Katalysatoraktivierung eingesetzten Propylenoxids betrug 150 g/50 g = 3 g/g. Auf die Stoffmenge des Propylenoxids umgerechnet betrug das Verhältnis 3,44 mol/50 g = 0,069 mol/g. Inklusive des zur Aktivierung eingesetzten Propylenoxids (20 g) betrugen die Verhältnisse 3,4 g/g und 0,059 mol/g.

300 mg getrockneter DMC-Katalysator, der nicht aktiviert ist, wurde in 200,0 g 4-Methyl-2-oxo-1,3-dioxolan (im Folgenden auch als cyclisches Propylencarbonat oder cPC bezeichnet) in einem 1,0 L Druckreaktor mit Gasdosierungseinrichtung suspendiert. Die Suspension wurde unter Rühren (500 rpm) auf 130 °C erhitzt. Gleichzeitig wurde für 30 min ein Vakuum angelegt und der Druck mit einem konstanten Volumenstrom mit Stickstoff durch den Reaktor auf 100 mbar eingestellt (Vakuumstrippen).

Nach beendetem Vakuumstrippen wurde der Druck mit Stickstoff auf 10 bar eingestellt und ein Puls Propylenoxid (10 g) zur Reaktionslösung gegeben. Der Vorgang wurde insgesamt zweimal durchgeführt. Die Aktivierung des Katalysators machte sich durch einen Temperaturanstieg bei gleichzeitigem Druckabfall bemerkbar. Im Anschluss an die Katalysatoraktivierung wurde der Reaktor auf Raumtemperatur abgekühlt und der Druck abgelassen. In den Reaktor wurden 50,0 g Polyoxymethylen-Polymer hinzugefügt und der Reaktor erneut verschlossen und durch Aufpressen und Ablassen mit Stickstoff gespült. Anschließend wurde ein Druck von 10 bar Stickstoff eingestellt. Die Reaktorinnentemperatur wurde auf 70 °C eingestellt.

Zu der Suspension wurden 10 g Propylenoxid mit einer Förderrate von 10 g/min schnell addiert. Nach beendeter Zugabe und Erreichen eines konstanten Drucks wurde abgewartet, bis eine exotherme Reaktion im Reaktor verbunden mit gleichzeitigem Druckabfall beobachtet werden konnte.

Nach dem Abklingen der exothermen Reaktion wurde die restliche Menge Propylenoxid (140 g) mit einer Förderrate von 3 g/min hinzugefügt (Semibatchphase). Nach beendeter Zugabe wurde bis zum Abklingen der exothermen Reaktion und bis zur Druckkonstanz bei 70 °C gerührt. Anschließend wurde der Reaktor abgekühlt und das Produkt entnommen. Die analytischen Daten sind in der Tabelle 1 angegeben. Die Molmassenverteilung ist im GPC-Diagramm der FIG. 3 zu sehen.

**Gegenbeispiel G1: Herstellung eines Polyoxymethylen-Polyoxyalkylen-Blockcopolymers unter Verwendung des Polyoxymethylen-Polymers als Startermaterial (PO/pFA = 1,67)**

Dieses Beispiel ist ein Vergleichsbeispiel, da das Verhältnis der Stoffmenge an Propylenoxid zur Masse des

Polyoxymethylen-Polymers unterhalb der erfindungsgemäßen Untergrenze liegt.

Entsprechend des Beispiels 1 wurde ein Polyoxymethylen-Polyoxyalkylen-Blockcopolymer hergestellt, wobei während der Semibatchphase nur 50 g Propylenoxid gefördert wurden. Nach der Reaktion befand sich viel Feststoff in der Reaktionslösung und an der Reaktorwand, sodass das Produkt nicht analysiert werden konnte.

**Gegenbeispiel G2: Herstellung eines Polyoxymethylen-Polyoxyalkylen-Blockcopolymers unter Verwendung von kommerziellem Paraformaldehyd (Granuform M)**

Dieses Beispiel ist ein Vergleichsbeispiel, da die Molmasse des Paraformaldehyds nicht im erfindungsgemäß vorgesehenen Bereich liegt.

1400 mg getrockneter DMC-Katalysator, der nicht aktiviert ist, wurde in 200,0 g 4-Methyl-2-oxo-1,3-dioxolan (im Folgenden auch als cyclisches Propylencarbonat oder cPC bezeichnet) in einem 1,0 L Druckreaktor mit Gasdosierungseinrichtung suspendiert. Die Suspension wurde unter Rühren (500 rpm) auf 130 °C erhitzt. Gleichzeitig wurde für 30 min ein Vakuum angelegt und der Druck mit einem konstanten Volumenstrom mit Stickstoff durch den Reaktor auf 100 mbar eingestellt (Vakuumstrippen).

Nach beendetem Vakuumstrippen wurde der Druck mit Stickstoff auf 10 bar eingestellt und ein Puls Propylenoxid (10 g) zur Reaktionslösung gegeben. Der Vorgang wurde insgesamt zweimal durchgeführt. Die Aktivierung des Katalysators machte sich durch einen Temperaturanstieg bei gleichzeitigem Druckabfall bemerkbar. Im Anschluss an die Katalysatoraktivierung wurde der Reaktor auf Raumtemperatur abgekühlt und der Druck abgelassen. In den Reaktor wurden 157,2 g Paraformaldehyd (Granuform M) hinzugefügt und der Reaktor erneut verschlossen und durch Aufpressen und Ablassen mit Stickstoff gespült. Anschließend wurde ein Druck von 10 bar Stickstoff eingestellt. Die Reaktorinnentemperatur wurde auf 70 °C eingestellt.

Zu der Suspension wurden 160 g Propylenoxid mit einer Förderrate von 10 g/min schnell addiert. Nach beendeter Zugabe und Erreichen eines konstanten Drucks wurde abgewartet, bis eine exotherme Reaktion im Reaktor verbunden mit gleichzeitigem Druckabfall beobachtet werden konnte.

Nach dem Abklingen der exothermen Reaktion wurde die restliche Menge Propylenoxid (362,8 g) mit einer Förderrate von 3 g/min hinzugefügt (Semibatchphase). Nach beendeter Zugabe wurde bis zum Abklingen der exothermen Reaktion und bis zur Druckkonstanz bei 100 °C gerührt. Anschließend wurde der Reaktor abgekühlt und das Produkt entnommen. Die analytischen Daten sind in der Tabelle 1 angegeben. Die Molmassenverteilung ist im GPC-Diagramm der FIG. 4 zu sehen.

Tabelle 1. "Starter" bezeichnet Polyoxymethylen-Polymer oder Paraformaldehyd. "pFA" bezeichnet polymeres Formaldehyd (Polyoxymethylen-Polymer). "n.d.": nicht bestimmt. *: berechnet mit MW = $M_n$(GPC) · 0,7 (Korrekturfaktor); **: auf Grundlage von berechnetem MW des Block-Copolymers

| Nr. | MW (OHZ) ($g \cdot mol^{-1}$) | PDI | pFA in polymer (%) | MW (pFA) nach NMR ($g \cdot mol^{-1}$) | MW (pFA) gravim. ($g \cdot mol^{-1}$) |
|---|---|---|---|---|---|
| 1 | 7430,5 | 1,62 | 19,4 | 1229 | 1448 |
| 2 | 6759,0 | 1,49 | 23,2 | 1442 | 1438 |
| 3 | 8904* | 1,60 | 22,8 | 2030** | 2000** |
| G1 | n.d. | n.d. | n.d. | n.d. | n.d. |
| G2 | 1968,4 | 1,23 | 23,5 | 463 | 472 |

## Patentansprüche

1. Verfahren zur Herstellung von Polyoxymethylen-Polyalkylenoxid-Blockcopolymeren, umfassend den Schritt der Polymerisation eines Alkylenoxids in Gegenwart eines OH-terminierten Polyoxymethylen-Polymers und eines Katalysators,
   **dadurch gekennzeichnet, dass**
   das Polyoxymethylen-Polymer ein zahlenmittleres Molekulargewicht $M_n$, bestimmt nach Derivatisierung mit Propylenoxid und Gelpermeationschromatographie mit Tetrahydrofuran als Eluent gegen Polystyrol-Standards, von $\geq$ 1100 g/mol bis $\leq$ 2300 g/mol aufweist und dass
   das Verhältnis von Alkylenoxid zu Polyoxymethylen-Polymer $\geq$ 0.05 mol/g beträgt.

2. Verfahren gemäß Anspruch 1, wobei der Katalysator ein Doppelmetallcyanid-Katalysator ist.

**3.** Verfahren gemäß Anspruch 1 oder 2, wobei das Gewichtsverhältnis von Alkylenoxid zu Polyoxymethylen-Polymer weiterhin ≤ 4,5:1 beträgt.

**4.** Verfahren gemäß einem der Ansprüche 1 bis 3, wobei das Polyoxymethylen-Polymer eine durchschnittliche OH-Funktionalität von > 1,9 aufweist.

**5.** Verfahren gemäß einem der Ansprüche 1 bis 4, wobei in der Reaktion ein Comonomer mit eingesetzt wird, welches kein Alkylenoxid ist.

**6.** Verfahren gemäß einem der Ansprüche 1 bis 5, wobei der Katalysator ein Doppelmetallcyanid-Katalysator (DMC-Katalysator) ist und wobei

(i) in einem ersten Schritt der DMC-Katalysator in Gegenwart des Polyoxymethylen-Polymers aktiviert wird, wobei zur Aktivierung des DMC-Katalysators eine Teilmenge (bezogen auf die Gesamtmenge der bei der Aktivierung und Polymerisation eingesetzten Menge an Alkylenoxid) von einem Alkylenoxid zugesetzt wird,
(ii) in einem zweiten Schritt ein Alkylenoxid zu der aus Schritt (i) resultierenden Mischung zugesetzt wird, wobei das in Schritt (ii) eingesetzte Alkylenoxid gleich oder verschieden sein kann von dem in Schritt (i) eingesetzten Alkylenoxid und

wobei die Aktivierung des DMC-Katalysators im ersten Schritt (i) bei einer Aktivierungstemperatur von ≥ 20 °C bis ≤ 120 °C erfolgt.

**7.** Verfahren gemäß Anspruch 6, wobei im ersten Schritt (i)

($\alpha$) ein Suspensionsmittel oder das Polyoxymethylen-Polymer vorgelegt und eventuell vorhandenes Wasser und/oder andere leicht flüchtige Verbindungen durch erhöhte Temperatur und/oder reduzierten Druck entfernt werden (Trocknung), wobei der DMC-Katalysator dem Polyoxymethylen-Polymer oder dem Suspensionsmittel vor oder nach der Trocknung zugesetzt wird,
($\beta$) zur Aktivierung des DMC-Katalysators in Gegenwart des Polyoxymethylen-Polymers eine Teilmenge (bezogen auf die Gesamtmenge der bei der Aktivierung und Polymerisation eingesetzten Menge an Alkylenoxide) von Alkylenoxid zu der aus Schritt (a) resultierenden Mischung zugesetzt wird und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (ß) zur Aktivierung auch mehrfach erfolgen kann, und im zweiten Schritt (ii)
($\gamma$) ein Alkylenoxid zu der aus Schritt ($\beta$) resultierenden Mischung zugesetzt werden, wobei in Schritt ($\gamma$) eingesetztes Alkylenoxid gleich oder verschieden sein kann von in Schritt ($\beta$) eingesetztem Alkylenoxid und wobei wenigstens in einem der Schritte ($\alpha$) und ($\beta$) mindestens ein Polyoxymethylen-Polymer zugesetzt wird.

**8.** Verfahren gemäß Anspruch 7, wobei Schritt ($\gamma$) bei einer Temperatur von ≥ 60 °C bis ≤ 70 °C durchgeführt wird.

**9.** Verfahren gemäß Anspruch 7 oder 8, wobei in Schritt ($\alpha$) als Suspensionsmittel mindestens eine Verbindung ausgewählt aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Propylencarbonat und Tetrachlorkohlenstoff eingesetzt wird.

**10.** Verfahren gemäß einem der Ansprüche 7 bis 9, wobei in Schritt ($\alpha$)

($\alpha$1) ein Suspensionsmittel und der DMC-Katalysator vorgelegt und Wasser und/oder andere leicht flüchtige Verbindungen dadurch entfernt werden, dass bei einer Temperatur von ≥ 90 °C bis ≤ 150 °C mindestens einmal mit > 1 bar bis ≤ 100 bar (absolut) eines Inertgases beaufschlagt wird und jeweils anschließend der Überdruck auf > 1 bar bis ≤ 20 bar (absolut) reduziert wird und in einem darauffolgenden Schritt
($\alpha$2) zu dem Gemisch aus Schritt ($\alpha$1) das Polyoxymethylen-Polymer zugegeben wird.

**11.** Polyoxymethylen-Polyalkylenoxid-Blockcopolymer, erhältlich nach einem Verfahren gemäß einem der Ansprüche 1 bis 10.

**12.** Polyoxymethylen-Polyalkylenoxid-Blockcopolymer gemäß Anspruch 11 mit einer Viskosität bei 20 °C, bestimmt durch DIN 51562, von ≥ 22000 mPas bis ≤ 26000 mPas.

**13.** Polyoxymethylen-Polyalkylenoxid-Blockcopolymer gemäß Anspruch 11 oder 12, wobei das Polymer ein Polyoxymethylen-Polyoxyalkylencarbonat-Block-Copolymer ist und einen inneren Polyoxymethylen-Block ("Starter") sowie wenigstens einen äußeren Polyoxyalkylencarbonatblock gemäß der Formel umfasst:

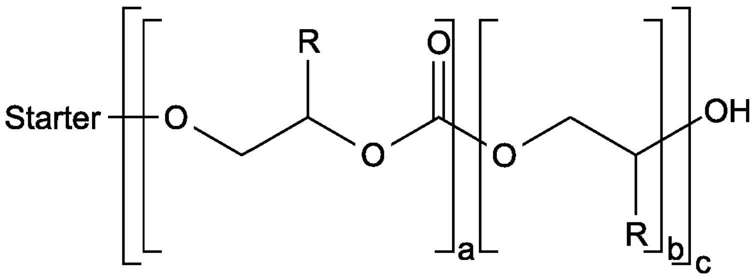

wobei R unabhängig voneinander für einen organischen Rest steht, a, b und c eine für eine ganze Zahl stehen, R sich in verschiedenen Wiederholungseinheiten unterscheiden kann, die Struktureinheit "Starter" einen aus dem Polyoxymethylen-Polymer hervorgehenden Polyoxymethylen-Block darstellt und a, b und c so gewählt sind, dass der Anteil des "Starters" ≤ 35 Gewichts-%, der Anteil von aus $CO_2$ hervorgehenden Struktureinheiten ≤ 25 Gewichts-% und der Anteil von aus Alkylenoxiden hervorgehenden Struktureinheiten die Differenz zu 100 Gewichts-%, jeweils bezogen auf das Gesamtgewicht des Polymers, ausmacht.

**14.** Verfahren zur Herstellung eines Polyurethan-Polymers, umfassend den Schritt der Reaktion einer Polyisocyanat-Komponente mit einer Polyolkomponente, **dadurch gekennzeichnet, dass** die Polyolkomponente ein Polyoxymethylen-Polyalkylenoxid-Blockcopolymer gemäß einem der Ansprüche 11 bis 13 umfasst.

**15.** Polyurethan-Polymer, erhältlich durch ein Verfahren gemäß Anspruch 14

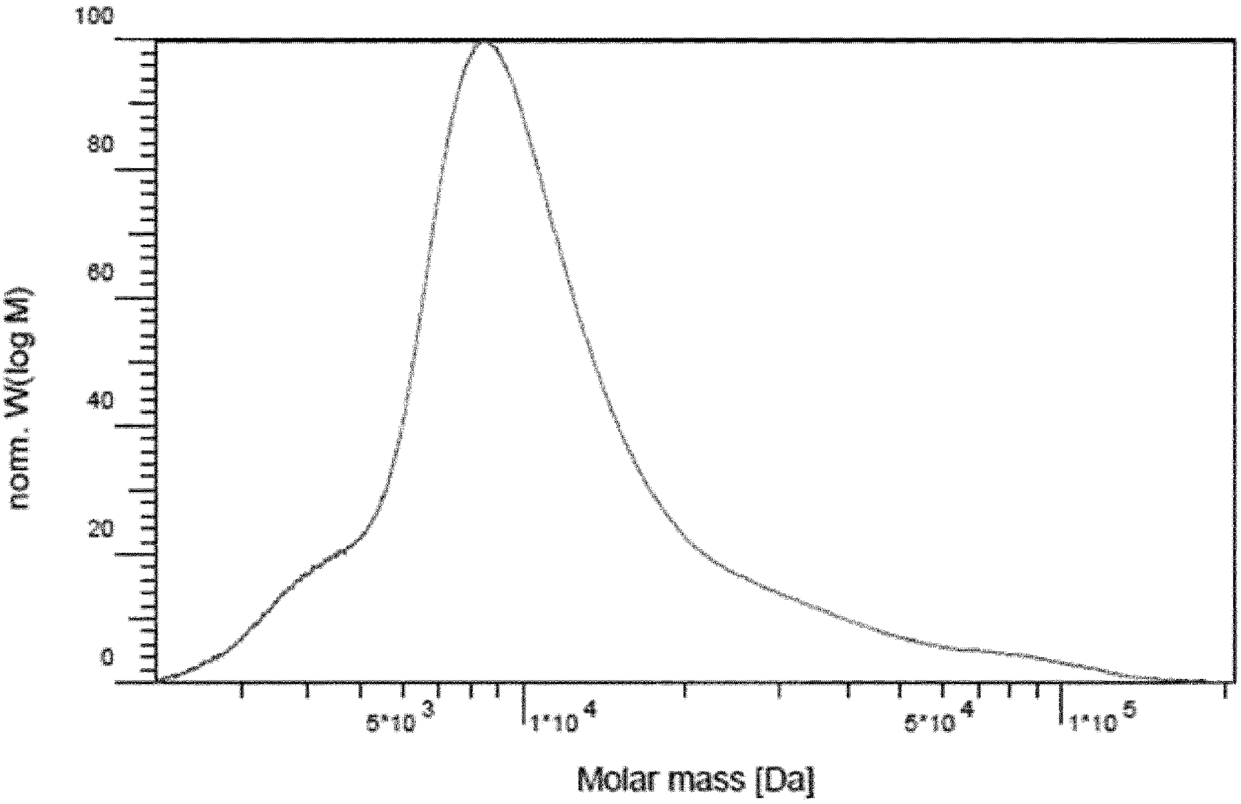


FIG. 1

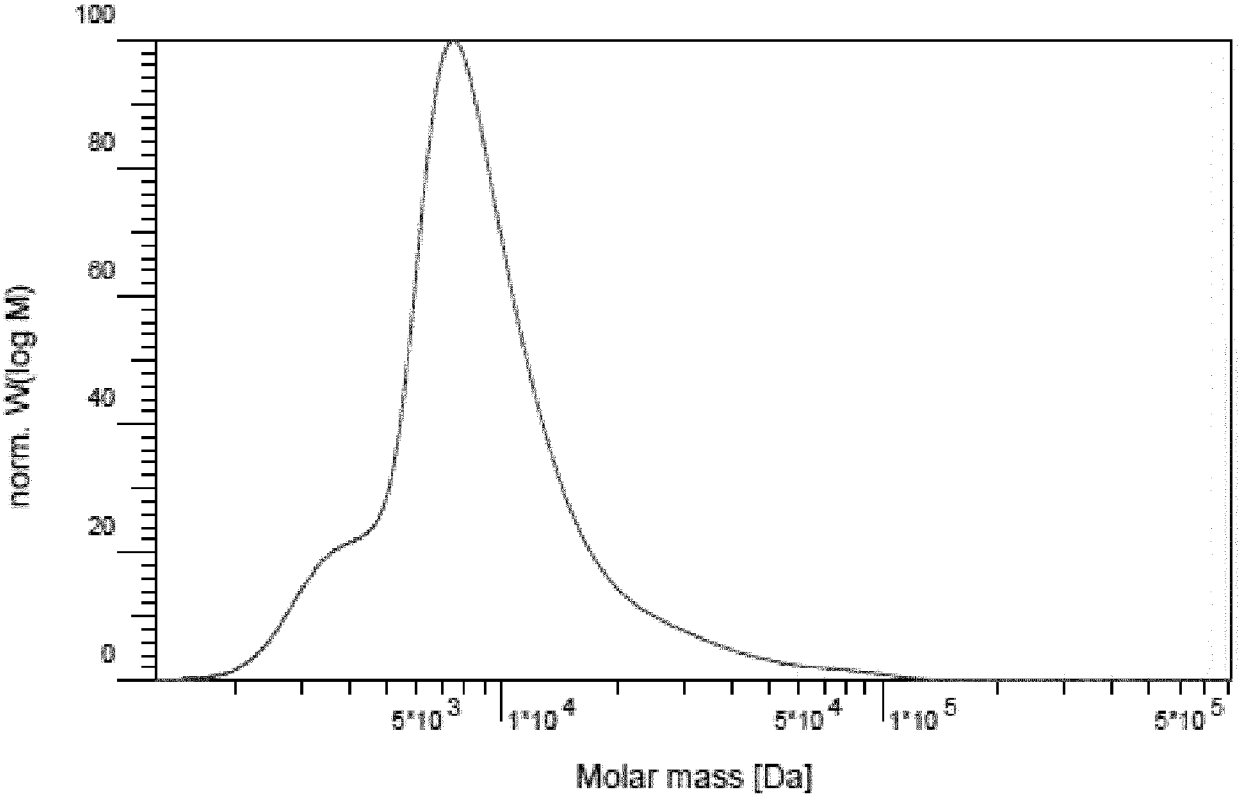
100
80
60
40
20
0
norm. W(log M)
5*10 3
1*10 4
5*10 4
1*10 5
5*10 5
Molar mass [Da]

FIG. 2

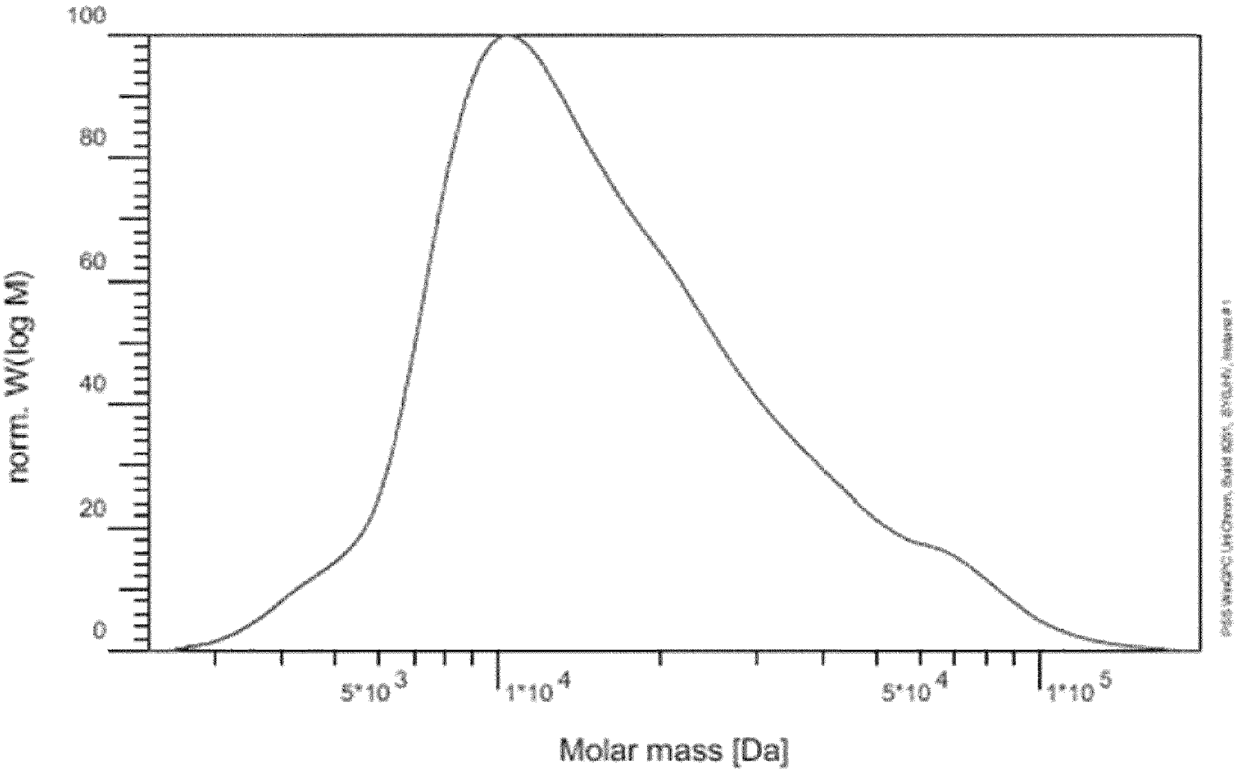


FIG 3

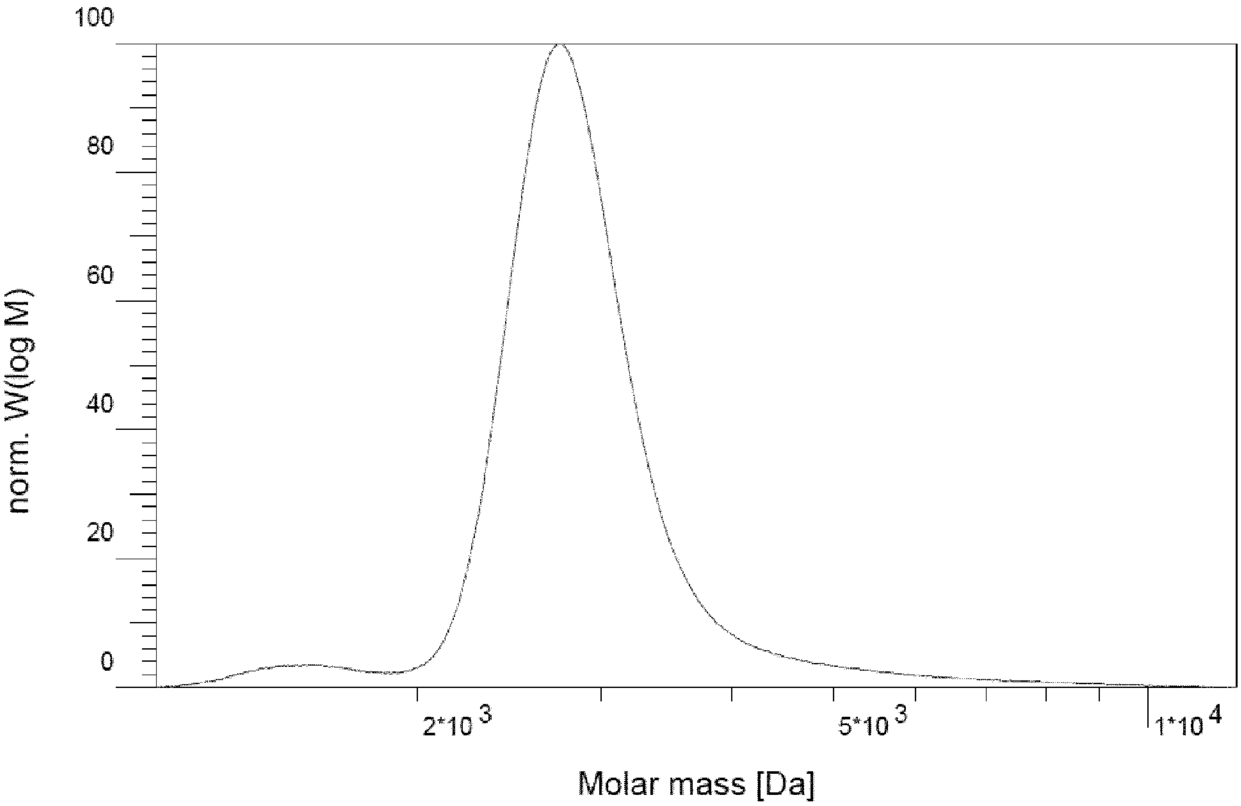


FIG. 4

Europäisches Patentamt
European Patent Office
Office européen des brevets

# EUROPÄISCHER RECHERCHENBERICHT

Nummer der Anmeldung
EP 18 20 7807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2015/155094 A1 (BAYER MATERIALSCIENCE AG [DE]) 15. Oktober 2015 (2015-10-15)<br>* Ansprüche 1-15 *<br>* Beispiele 1-4, 7, 8 *<br>* Seite 5, Zeile 7 - Zeile 10 *<br>----- | 1-15 | INV.<br>C08G2/22<br>C08G18/56<br>C08G64/18<br>C08G18/44<br>C08G2/38 |
| X<br><br>A | US 2016/130407 A1 (MUELLER THOMAS ERNST [DE] ET AL) 12. Mai 2016 (2016-05-12)<br>* Beispiel 2 *<br>* Ansprüche 1-18 *<br>----- | 1-5, 11-15<br>6-10 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 3. Mai 2019 | Laudi, Ines |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 20 7807

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

03-05-2019

| Im Recherchenbericht angeführtes Patentdokument | Datum der Veröffentlichung | Mitglied(er) der Patentfamilie | Datum der Veröffentlichung |
|---|---|---|---|
| WO 2015155094 A1 | 15-10-2015 | CN 106414532 A | 15-02-2017 |
| | | EP 3129419 A1 | 15-02-2017 |
| | | ES 2702327 T3 | 28-02-2019 |
| | | JP 2017510686 A | 13-04-2017 |
| | | SG 11201608076R A | 29-11-2016 |
| | | US 2017096526 A1 | 06-04-2017 |
| | | US 2018371159 A1 | 27-12-2018 |
| | | WO 2015155094 A1 | 15-10-2015 |
| US 2016130407 A1 | 12-05-2016 | CN 105408377 A | 16-03-2016 |
| | | EP 3008100 A1 | 20-04-2016 |
| | | ES 2627002 T3 | 26-07-2017 |
| | | JP 2016521788 A | 25-07-2016 |
| | | KR 20160018546 A | 17-02-2016 |
| | | PL 3008100 T3 | 31-08-2017 |
| | | RU 2016100416 A | 18-07-2017 |
| | | SG 11201509857P A | 30-12-2015 |
| | | US 2016130407 A1 | 12-05-2016 |
| | | WO 2014198689 A1 | 18-12-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2007211082 A
- WO 2004096746 A1
- GB 807589 A
- EP 1418190 A1
- US 3754053 A
- US 3575930 A
- US 20020016395 A
- JP 4306215 A
- US 20060205915 A1
- EP 1870425 A1
- WO 2012091968 A1
- WO 2015155094 A1
- EP 18207740 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4987271 A
- DE 3132258 A
- EP 0406440 A
- US 5391722 A
- US 5099075 A
- US 4721818 A
- US 4877906 A
- EP 0385619 A